# EUROPÄISCHE PATENTSCHRIFT

(11) **EP 3 432 382 B1**
(45) Veröffentlichungstag und Bekanntmachung des Hinweises auf die Patenterteilung: **27.11.2019**
(21) Anmeldenummer: 17182064.0
(22) Anmeldetag: 19.07.2017
(51) Int. Cl.: H01M 2/02, H01M 12/06, H01M 4/86

(54) **METALL/LUFT-ZELLE IN KNOPFZELLENFORM UND HERSTELLUNGSVERFAHREN**
METAL/AIR CELL OF THE BUTTON-CELL TYPE AND METHOD OF MANUFACTURING
CELLULE AIR/MÉTAL DE TYPE BOUTON ET PROCÉDÉ DE FABRICATION

(43) Veröffentlichungstag der Anmeldung: 23.01.2019
(73) Patentinhaber: VARTA Microbattery GmbH, 73479 Ellwangen (DE)
(72) Erfinder: Brenner, Rolf, 73479 Ellwangen (DE); Bühler, Berthold, 73479 Ellwangen (DE); Frosch, Stephan, 73479 Ellwangen (DE); Senz, Stefan, 73485 Unterschneidheim (DE); Thorwart, Wolfgang, 73495 Stödlen (DE); Wiedemann, Cornelia, 73433 Aalen (DE)
(74) Vertreter: Patentanwaltskanzlei Cartagena

(56) Entgegenhaltungen:
- EP-A1- 2 690 687
- DE-A1- 10 213 686
- US-A- 5 846 672
- US-A1- 2010 047 666

## Beschreibung

Die Erfindung betrifft eine Metall/Luft-Zelle in Knopfzellenform mit einem Gehäuse mit einem Innenraum, in dem eine metallhaltige Anode, eine Luftkathode, und ein zwischen der Anode und der Luftkathode angeordneter Separator angeordnet sind. Weiterhin betrifft die Erfindung ein Herstellungsverfahren für Metall/Luft-Zellen in Knopfzellenform.

Metall/Luft-Zellen enthalten als elektrochemische Aktivkomponenten üblicherweise eine metallbasierte Anode und eine Luftkathode, die durch einen Separator räumlich voneinander getrennt, gleichzeitig aber über einen ionenleitfähigen Elektrolyten miteinander verbunden sind. Der Separator ist üblicherweise mit dem Elektrolyten getränkt. Bei der Entladung wird an der Luftkathode Sauerstoff unter Elektronenaufnahme reduziert. Es entstehen Hydroxidionen, die über den Elektrolyten zur Anode wandern können. Dort wird das Metall, auf dem die Anode basiert, unter Elektronenabgabe oxidiert. Die entstehenden Metallionen reagieren mit den Hydroxidionen ab.

Es existieren sowohl primäre als auch sekundäre Metall/Luft-Zellen. Eine sekundäre Metall/Luft-Zelle wird wieder aufgeladen, indem zwischen Anode und Luftkathode eine Spannung angelegt und die beschriebene elektrochemische Reaktion umgekehrt wird. Dabei wird Sauerstoff freigesetzt.

Das bekannteste Beispiel einer Metall/Luft-Zelle ist die Zink/Luft-Zelle, wie sie beispielsweise aus der DE 102 13 686 A1bekannt ist. In Knopfzellenform findet diese insbesondere als Batterie für Hörgeräte Verwendung.

Zu den Begriffen Zelle und Batterie: Ursprünglich wurde zwischen diesen Begriffen klar unterschieden. Als Batterie wurde ausschließlich eine elektrische Zusammenschaltung mehrerer elektrochemischer Zellen innerhalb des gleichen Gehäuses bezeichnet. Mittlerweile werden in der Literatur jedoch häufig auch einzelne elektrochemische Zellen in einem Gehäuse als Batterie bezeichnet. Diese breitere Verwendung des Begriffs "Batterie" soll auch vorliegend Anwendung finden.

Metall/Luft-Zellen weisen eine sehr hohe Energiedichte auf, weil der Bedarf an Sauerstoff an der Luftkathode durch Luftsauerstoff aus der Umgebung gedeckt werden kann. Entsprechend muss der Luftkathode beim Entladevorgang Luftsauerstoff zugeführt werden. Umgekehrt muss beim Ladevorgang einer Metall/Luft-Zelle an der Luftkathode entstehender Sauerstoff abgeführt werden. Aus diesen Gründen weisen Metall/Luft-Zellen in der Regel Gehäuse auf, die mit entsprechenden Eintritts- bzw. Austrittsöffnungen versehen sind. In der Regel werden als Eintritts- bzw. Austrittsöffnungen Löcher in die Gehäuse eingestanzt.

Als Luftkathode kommen in Metall/Luft-Zellen üblicherweise Gasdiffusionselektroden zum Einsatz. Gasdiffusionselektroden sind Elektroden, in denen die an der elektrochemischen Reaktion beteiligten Stoffe (in der Regel ein Katalysator, ein Elektrolyt und Luftsauerstoff) nebeneinander in fester, flüssiger und gasförmiger Form vorliegen und miteinander in Kontakt treten können. Der Katalysator katalysiert die Reduktion des Luftsauerstoffs bei der Entladung und gegebenenfalls auch die Oxidation von Hydroxidionen bei der Ladung der Zellen.

Insbesondere in Metall/Luft-Zellen in Knopfzellenform kommen als Luftkathoden häufig kunststoffgebundene Gasdiffusionselektroden zum Einsatz. Solche Gasdiffusionselektroden sind beispielsweise in der DE 37 22 019 A1 beschrieben. In solchen Elektroden bildet ein Kunststoffbinder (z.B. Polytetrafluorethylen, kurz PTFE) eine poröse Matrix aus, in die Partikel aus einem elektrokatalytisch aktiven Material (zum Beispiel aus einem Edelmetall wie Platin oder Palladium oder aus einem Manganoxid) eingebettet sind. Diese müssen die erwähnte Umsetzung von Luftsauerstoff katalysieren können. Die Herstellung solcher Elektroden erfolgt in aller Regel, indem eine Trockenmischung aus dem Binder und dem Katalysator zu einer Folie ausgewalzt wird. Diese kann zum Beispiel in ein Netz oder Streckgitter aus Silber, Nickel oder versilbertem Nickel, eingewalzt werden. Das Metallnetz oder das Streckgitter bildet eine Ableiterstruktur innerhalb der Elektrode und dient als Stromableiter.

Die erwähnten Eintritts- bzw. Austrittsöffnungen für Sauerstoff sind in aller Regel in den Boden des Gehäuses einer Metall/Luft-Zelle eingebracht, insbesondere, wenn es sich hierbei um eine Knopfzelle handelt. Damit durch die Öffnungen eintretender Sauerstoff möglichst unmittelbar in Kontakt mit der Luftkathode treten kann, ist die Luftkathode in solchen Zellen üblicherweise flach auf dem Gehäuseboden positioniert, so dass sie die Öffnungen abdeckt. Gegebenenfalls kann es vorteilhaft sein, zwischen der Luftkathode und dem Gehäuseboden einen Luftverteiler vorzusehen, beispielsweise ein poröses Filterpapier. Dies ist aber nicht in allen Fällen erforderlich.

Wird nun in einer derart positionierten Luftkathode Sauerstoff reduziert, so werden die dabei freigesetzten Elektronen in der Regel über die erwähnte Ableiterstruktur abgeführt. Diese steht üblicherweise in unmittelbarem elektrischen Kontakt zu einem Teil des Gehäuses, das als Pol dienen kann. Bei Messungen an Metall/Luft-Zellen hat sich herausgestellt, dass Zellen mit dem geschilderten Aufbau oftmals starke Streuungen aufweisen, was ihre elektrochemischen Eigenschaften angeht. So weisen einzelne Zellen regelmäßig deutlich höhere Impedanzwerte auf als dies im Mittel zu erwarten gewesen wäre. Diese Zellen werden in der Regel aussortiert und stellen Ausschuss dar.

Aus der US 2010/0047666 A1 sind Zink/Luft-Zellen bekannt, in deren Gehäuse eine radiale Vertiefung eingebracht ist um bessere Impedanzwerte zu erzielen. Das Einbringen solcher radialer Vertiefungen erfordert allerdings aufwendige und teure Werkzeuge.

Der Erfindung lag die Aufgabe zugrunde, den Ausschuss bei der Produktion von Metall/Luft-Zellen in Knopfzellenform zu verringern.

Zur Lösung dieser Aufgabe schlägt die Erfindung eine Metall/Luft-Zelle mit den in Anspruch 1 genannten Merkmalen sowie ein Verfahren mit den in Anspruch 6 genannten Merkmalen vor.

Eine Metall/Luft-Zelle gemäß der vorliegenden Erfindung weist eine Anzahl von Merkmalen auf, die aus dem Stand der Technik bereits bekannt sind. So umfasst sie ein Gehäuse mit einem Innenraum, und in dem Innenraum eine metallhaltige Anode, eine Luftkathode, und einen zwischen der Anode und der Luftkathode angeordneten Separator.

Anode, Luftkathode und Separator unterscheiden sich grundsätzlich nicht von entsprechenden Komponenten herkömmlicher Zellen. Beispielsweise eignen sich die eingangs beschriebenen Gasdiffusionselektroden als Luftkathoden für eine erfindungsgemäße Metall/Luft-Zelle. Bei der metallhaltigen Anode handelt es sich besonders bevorzugt um eine zinkhaltige Anode. Die erfindungsgemäße Metall/Luft-Zelle ist also bevorzugt eine Zink/Luft-Knopfzelle.

An Stelle von Zink können grundsätzlich aber auch andere oxidierbare Metalle, beispielsweise Aluminium, verwendet werden. Als Separator eignen sich beispielsweise ein mit Elektrolyt getränktes Vlies oder eine mit Elektrolyt getränkte poröse Kunststofffolie.

Die für die erfindungsgemäße Metall/Luft-Zelle geeigneten Elektrolyte sind nahezu samt und sonders wässrige Lösungen, insbesondere alkalische wässrige Lösungen.

Die erfindungsgemäße Zelle ist als Knopfzelle ausgebildet. Das Gehäuse einer erfindungsgemäßen Zelle umfasst entsprechend einen Zellenbecher und einen Zellendeckel sowie eine Dichtung. Der Zellenbecher und der Zellendeckel bilden - wie bei Knopfzellen üblich - die Pole der Zelle.

Der Zellenbecher weist einen Bodenbereich, einen ringförmigen Mantelbereich und eine den Bodenbereich und den Mantelbereich trennende umlaufende Kante auf. Die Kante kann hierbei scharf ausgebildet sein oder auch abgerundet.

Der Zellendeckel ist bevorzugt ähnlich aufgebaut. Er weist in der Regel ebenfalls einen Bodenbereich und einen ringförmigen Mantelbereich auf. An Stelle einer umlaufenden Kante kann er allerdings auch einen bevorzugt schulterförmigen Übergangsbereich aufweisen.

Der Zellenbecher und jeder seiner Bereiche weist eine in den Innenraum weisende Innenseite sowie eine entgegengesetzt gerichtete Außenseite auf. Gleiches gilt auch für den Zellendeckel und jeden seiner Bereiche.

Bevorzugt weisen sowohl der Zellenbecher als auch der Zellendeckel die Form eines Bechers oder Napfes auf. Beide weisen bevorzugt eine umlaufende Schnittkante auf, die in vielen Fällen den Öffnungsrand des Zellenbechers sowie des Zellendeckels bildet. In bevorzugten Ausführungsformen kann die Schnittkante des Zellendeckels endständig umgeschlagen sein, so dass sich ein doppelwandiger Öffnungsrand ergibt. Der Öffnungsrand begrenzt den jeweiligen Mantelbereich und definiert jeweils eine Öffnung, über die das Innere von Zellenbecher und Zellendeckel zugänglich ist.

In bevorzugten Ausführungsformen sind die Bodenbereiche von Zellenbecher und Zellendeckel eben ausgebildet und weisen eine kreisförmige oder ovale Geometrie auf. Gleiches gilt bevorzugt auch für die von dem Öffnungsrand definierte Öffnung.

Besonders bevorzugt sind die ebenen Bodenbereiche von Zellenbecher und Zellendeckel in dem Gehäuse parallel zueinander angeordnet.

Die ringförmigen Mantelbereiche von Zellenbecher und Zellendeckel weisen bevorzugt eine kreisförmige oder ovale Geometrie auf. In der Regel sind die ringförmigen Mantelbereiche oder zumindest ein axiales Segment der ringförmigen Mantelbereiche orthogonal oder zumindest im Wesentlichen orthogonal zu den dazugehörigen Bodenbereichen ausgerichtet. Die Höhen der Mantelbereiche sind in Umfangsrichtung bevorzugt jeweils konstant.

Im Falle des Zellenbechers ist es bevorzugt, dass der Mantelbereich in einem Winkel vom 90° auf den Bodenbereich stößt. Die Kante des Zellenbechers bildet in diesem Fall bevorzugt eine scharfe Grenze zwischen dem Boden- und dem Mantelbereich des Zellenbechers. Anders beim Zellendeckel: Obwohl in bevorzugten Ausführungsformen der Bodenbereich des Zellendeckels mit dem ringförmigen Mantelbereich des Zellendeckels oder zumindest einem axialen Segment des Mantelbereichs ebenfalls einen Winkel von 90° einschließt, ist es bevorzugt, dass die Bereiche nicht unmittelbar aufeinander stoßen. Die sich ergebende Lücke wird von dem bevorzugt schulterförmigen Übergangsbereich ausgefüllt.

In der Regel ist der Zellendeckel mit der Schnittkante bzw. dem Öffnungsrand voran in den Zellenbecher eingeschoben. Die Dichtung trennt den Zellenbecher und den Zellendeckel voneinander. Sie soll gewährleisten, dass die beiden Gehäuseteile elektrisch gegeneinander isoliert sind. Darüber soll sie das Gehäuse abdichten und ein Auslaufen von Elektrolyt verhindern.

Das aus dem Zellenbecher und dem Zellendeckel zusammengesetzte Gehäuse weist bevorzugt eine zylindrische Grundgeometrie auf. In der Regel bildet der Bodenbereich des Zellenbechers eine flache Unterseite des Gehäuses während der Bodenbereich des Zellendeckels eine flache Oberseite des Gehäuses bildet. Seitlich wird das Gehäuse durch den Mantelbereich des Zellenbechers begrenzt.

Geschlossen ist das Gehäuse meist durch Umbördeln. Hierzu wird ein endständiges Segment des Mantelbereichs des Zellenbechers einschließlich des den Mantelbereich begrenzenden Öffnungsrands radial nach innen eingedrückt, so dass eine Verringerung des Querschnitts der von dem Öffnungsrand definierten Öffnung resultiert. Der umgebördelte Öffnungsrand liegt in bevorzugten Ausführungsformen auf dem Übergangsbereich des Zellendeckels bzw. auf einer in diesem Bereich aufgebrachten Dichtung auf. Durch das Umbördeln werden der Zellenbecher und der Zellendeckel in der Regel formschlüssig miteinander verbunden.

Sowohl der Zellenbecher als auch der Zellendeckel sind in der Regel aus metallischen Materialien gefertigt, meist in Tiefziehprozessen. Geeignet sind beispielsweise vernickeltes Tiefziehblech oder plattiertes Verbundmaterial mit einer Lage Nickel, einer Lage Kupfer und einer dazwischenliegenden Lage aus Stahl bzw. Edelstahl (sogenanntes Trimetall).

Bei der Dichtung handelt es sich bevorzugt um eine Foliendichtung, wie sie z. B. in der DE 196 47 593 A1 beschrieben ist. Bevorzugt kommen Foliendichtungen aus einem Thermoplast zum Einsatz. Als Material eignen sich beispielsweise Polyamid oder Polyetheretherketon.

Alternativ kann es sich bei der Dichtung allerdings auch um eine klassische Spritzgussdichtung, beispielsweise ebenfalls aus einem Polyamid handeln.

Wie alle bekannten Zink-Luft-Zellen weist auch die erfindungsgemäße Zelle mindestens eine Eintrittsöffnung auf, über die Luftsauerstoff in den Innenraum eindringen kann. Erfindungsgemäß bevorzugt ist hierbei, dass die Eintrittsöffnung im Bodenbereich des Zellenbechers angeordnet ist.

In der Regel weist die Zelle 1 bis 10 Eintrittsöffnungen, bevorzugt 1 bis 5 Eintrittsöffnungen, auf.

Bei einer erfindungsgemäßen Zink/Luft-Zelle ist die Luftkathode als Kathodenscheibe mit einem umlaufenden Kathodenscheibenrand ausgebildet. Die Kathodenscheibe ist derart in dem Gehäuse der erfindungsgemäßen Zelle angeordnet, dass der Kathodenscheibenrand entlang einer umlaufenden Kontaktzone an der Innenseite des Mantelbereichs des Zellenbechers anliegt.

Wie aus dem Stand der Technik bekannt, umfasst die Luftkathode einer erfindungsgemäßen Zink/Luft-Zelle eine metallische Ableiterstruktur, die an dem Kathodenscheibenrand aus der Kathodenscheibe austritt. Hierbei kann es sich beispielsweise um das eingangs erwähnte Netz aus Silber, Nickel oder versilbertem Nickel handeln. Alternativ können metallische Gitter, Streckmetalle, metallisierte Vliese und ähnliche elektrische Leiter verwendet werden.

In aller Regel besteht an den Stellen, an denen die metallische Ableiterstruktur aus dem Kathodenscheibenrand austritt, eine elektrisch leitende Verbindung zum Zellenbecher. Die daraus resultierende elektrische Verbindung zur Luftkathode bestimmt die Polung des Zellenbechers.

Bei der Analyse der eingangs zur Sprache kommenden Ausschuss-Zellen mit erhöhten Impedanzwerten stieß man darauf, dass die höhere Impedanz sehr häufig ihre Ursache in einer unzureichenden elektrischen Verbindung der Ableiterstruktur mit dem Zellenbecher entlang der umlaufenden Kontaktzone hat.

Gegenüber dem Stand der Technik zeichnet sich die erfindungsgemäße Zelle dadurch aus, dass der Zellenbecher auf seiner Außenseite mindestens eine lokale Vertiefung aufweist, die auf der Innenseite des Zellenbechers als Erhöhung in Erscheinung tritt, wobei die mindestens eine Vertiefung derart in die Außenseite des Mantelbereichs eingebracht ist, dass die Erhöhung im Bereich der Kontaktzone einen Druck gegen den Kathodenscheibenrand ausübt.

Die lokale Vertiefung ist durch Eindrücken in die Außenseite des Zellenbechers eingebracht. Bevorzugt ist die lokale Vertiefung zumindest beidseitig in Umfangsrichtung, bevorzugt beidseitig in Umfangsrichtung und zumindest einseitig in axialer Richtung, begrenzt.

Überraschenderweise wurde festgestellt, dass durch das Einbringen der mindestens einen Vertiefung die Ausschussrate bei der Herstellung von Zink/Luft-Zellen signifikant gesenkt werden konnte. In Tests wurde eine Senkung der Ausschussrate um mehr als 90 %, in einigen Fällen sogar um mehr als 95 %, beobachtet.

Es gibt zwei mögliche Varianten, das Einbringen der mindestens einen Vertiefung in bestehende Prozesse zur Herstellung von Zink/Luft-Zellen zu implementieren. Zum einen kann sich das Einbringen an einen Impedanztest anschließen, in dem die Funktionsfähigkeit hergestellter Zellen überprüft wurde. Bevorzugt wird das Einbringen der mindestens einen Vertiefung dann nur bei auffälligen Zellen durchgeführt. Defekte Zellen mit hoher Impedanz können durch die Maßnahme wieder in einen Normalzustand überführt werden.

Zum anderen kann das Einbringen der mindestens einen Vertiefung nach der Zell-Herstellung auch vor der Durchführung des Impedanztests durchgeführt werden. In diesem Fall erfolgt das Einbringen der mindestens einen Vertiefung bei allen Zellen.

Die mindestens eine Vertiefung ist länglich ausgebildet und erstreckt sich auf der Außenseite des Mantelbereichs des Zellenbechers in axialer Richtung.

In bevorzugten Ausführungsformen zeichnet sich die erfindungsgemäße Zelle durch eine Kombination des folgenden Merkmals a mit mindestens einem der folgenden Merkmale b bis f aus:
a. Der Bodenbereich des Zellenbechers ist eben.
b. Die Kathodenscheibe ist parallel zu dem Bodenbereich des Zellenbechers ausgerichtet.
c. Zwischen dem Bodenbereich des Zellenbechers und der Kathodenscheibe befindet sich eine Luftverteilerschicht.
d. Der Separator ist als Separatorscheibe mit einem umlaufenden Separatorscheibenrand ausgebildet.
e. Die Separatorscheibe ist parallel zum Bodenbereich ausgerichtet.
f. Die Separatorscheibe liegt unmittelbar auf der Kathodenscheibe auf.

Insbesondere die Merkmale a bis c sowie e und f sind in der Regel gleichzeitig realisiert. Auf Merkmal c hingegen kann in einigen Ausführungsformen erfindungsgemäßer Zellen verzichtet werden, beispielsweise bei den in der WO 2012/022778 A1 beschriebenen Anwendungsfällen.

Bei der Luftverteilerschicht kann es sich beispielsweise um ein Filterpapier oder eine sonstige geeignete mikroporöse Schicht, etwa ein Vlies oder ein Filz, handeln.

Die Kathodenscheibe und die Separatorscheibe werden zur Herstellung der erfindungsgemäßen Knopfzelle in der Regel aus bandförmigen Folien ausgeschnitten oder ausgestanzt und sequentiell in den Zellenbecher, bevorzugt auf den Bodenbereich des Zellenbechers mit der mindestens einen Eintrittsöffnung, gepresst. Zuvor wird der Boden gegebenenfalls mit einer Luftverteilerschicht abgedeckt. In der Regel sind die Kathodenscheibe, die Separatorscheibe und die Luftverteilerschicht als Kreisscheiben mit annähernd gleichem Durchmesser ausgebildet. Im Innenraum des Gehäuses liegen sie dann flach aufeinander.

In weiteren bevorzugten Ausführungsformen zeichnet sich die erfindungsgemäße Zelle durch mindestens eines der folgenden Merkmale aus:
a. Die mindestens eine Vertiefung ist als Kerbe ausgebildet.
b. Die Kerbe erstreckt sich auf der Außenseite des Mantelbereichs des Zellenbechers in axialer Richtung.
c. Die mindestens eine längliche Vertiefung, insbesondere die Kerbe, erstreckt sich ausgehend von der umlaufenden Kante des Zellenbechers axial in den Mantelbereich.

Die Form der mindestens einen Vertiefung ist grundsätzlich nicht kritisch. Wichtig ist für ihre Funktion lediglich, dass die mindestens eine Vertiefung derart in die Außenseite des Mantelbereichs eingebracht ist, dass der erwähnte Druck gegen den Kathodenscheibenrand ausgeübt wird. Es hat sich allerdings als vorteilhaft erwiesen, wenn in der erfindungsgemäßen Zelle zumindest eines der drei unmittelbar vorstehend gelisteten Merkmale a bis c realisiert ist, insbesondere alle drei Merkmale a bis c. Auch die absoluten Dimensionen der mindestens einen Vertiefung sind grundsätzlich von sekundärer Bedeutung. Typische Ausführungsformen erfindungsgemäßer Metall/Luft-Knopfzellen zeichnen sich durch eine näherungsweise zylindrische Bauform bei einer Zellhöhe im Bereich von 3,30 mm (Bauform PR70 gemäß der Internationalen Elektrotechnischen Kommission, kurz IEC 60082-2) bis 5,40 mm (Bauform PR44 gemäß IEC) und einen Zelldurchmesser im Bereich von 5,65 mm (Bauform PR70 gemäß IEC) und 11,60 mm (Bauform PR44 gemäß IEC) aus. Bei solchen Zellen können die Vertiefungen in Form von sich ausgehend von der umlaufenden Kante des Zellenbechers axial in den Mantelbereich erstreckenden Kerben in bevorzugten Ausführungsformen beispielsweise eine maximale Länge von bis zu 0,7 mm und eine maximale Breite von bis zu 0,4 mm sowie eine maximale Tiefe von bis zu 0,2 mm aufweisen.

Bevorzugt liegt die maximale Tiefe der Kerben im Bereich von 0,05 mm bis 0,10 mm. Die maximale Länge der Kerben liegt bevorzugt im Bereich von 0,3 bis 0,5 mm. Die maximale Breite der Kerben liegt bevorzugt im Bereich von 0,05 bis 0,30 mm.

In bevorzugten Ausführungsformen zeichnet sich die erfindungsgemäße Zelle durch eine Kombination der folgenden Merkmale aus:
a. Der Mantelbereich des Zellenbechers umfasst ein endständiges Segment, das zum Schließen des Gehäuses radial nach innen eingedrückt ist.
b. Die mindestens eine längliche Vertiefung erstreckt sich ausgehend von der umlaufenden Kante des Zellenbechers axial über den Mantelbereichs bis hin zu dem endständigen Segment.

In bevorzugten Ausführungsformen weist eine erfindungsgemäße Zelle mehr als eine durch Eindrücken eingebrachte lokale Vertiefung auf. Die Zelle kann eine Vielzahl solcher Vertiefungen aufweisen, bevorzugt sind es 2 bis 12 Vertiefungen, besonders bevorzugt 2 bis 8 Vertiefungen, insbesondere 2 bis 6 Vertiefungen.

Bei zwei oder mehr lokalen Vertiefungen ist es grundsätzlich bevorzugt, dass die Vertiefungen in Umfangsrichtung gleichmäßig auf der Außenseite des Mantelbereichs verteilt sind. Das bedeutet, dass benachbarte Vertiefungen in gleichen Abständen voneinander in die Außenseite eingebracht sind. Weist der Mantelbereich des Zellenbechers beispielsweise eine kreisförmige Geometrie auf, so ist es bei drei Vertiefungen bevorzugt, dass benachbarte Vertiefungen jeweils einen Kreisausschnitt mit einem Mittelpunktswinkel von 120 ° begrenzen. Bei vier Vertiefungen ist es bevorzugt, dass benachbarte Vertiefungen jeweils einen Kreisausschnitt mit einem Mittelpunktswinkel von 90 ° begrenzen. Bei sechs Vertiefungen ist es bevorzugt, dass benachbarte Vertiefungen jeweils einen Kreisausschnitt mit einem Mittelpunktswinkel von 60 ° begrenzen.

Die mindestens eine Vertiefung wird bevorzugt durch Kerben oder Prägen gebildet. Grundsätzlich ist die Wahl, auf welche Art die Vertiefung in die Außenseite des Zellenbechers eingedrückt wird, aber nicht entscheidend. Wichtig ist lediglich, dass die Vertiefung derart eingebracht wird, dass sie auf der Innenseite des Zellenbechers als Erhöhung in Erscheinung tritt und die Erhöhung im Bereich der Kontaktzone gegen den Kathodenscheibenrand drückt.

Geeignete Werkzeuge zum Einbringen der Vertiefung werden im Folgenden noch beschrieben.

Wie oben erwähnt, erfolgt das Einbringen der mindestens einen Vertiefung bevorzugt nach der Zell-Herstellung. Besonders bevorzugt umfasst die Zell-Herstellung den beschriebenen Schritt des Umbördelns. Besonders bevorzugt wird die mindestens eine Vertiefung unmittelbar nach dem Verschließen des Gehäuses in die Außenseite des Zellenbechers eingebracht.

Die beschriebene Erfindung ist grundsätzlich nicht nur auf Zink/Luft-Zellen anwendbar. Bekanntlich weisen Gaserzeugerzellen, wie sie beispielsweise in der DE 3532335 A1 beschrieben sind, grundsätzlich den gleichen Aufbau wie Zink/Luft-Zellen auf. Das Einbringen von lokalen Vertiefungen gemäß der Erfindung in den Außenmantel von Gaserzeugerzellen hätte somit den gleichen positiven Effekt.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnungen. Hierbei zeigen:
Die Figuren 1 und 1a einen Querschnitt einer aus dem Stand der Technik bekannten Zink/Luft-Knopfzelle und eine teilweise Vergrößerung dieses Querschnitts (jeweils schematische Darstellung);
Die Figuren 2 und 2a einen Querschnitt einer Ausführungsform einer erfindungsgemäßen Zink/Luft-Knopfzelle und eine teilweise Vergrößerung dieses Querschnitts (jeweils schematische Darstellung);
Figur 3 eine Draufsicht schräg von oben auf die in den Figuren 2 und 2a dargestellte Zink/Luft-Knopfzelle;
Figur 3a einen auszugsweisen Querschnitt durch die in Fig. 3 dargestellte Zink/Luft-Knopfzelle;
Figur 4 eine Schnittansicht eines zur Herstellung erfindungsgemäßer Metall/Luft-Knopfzellen geeigneten Werkzeugs 400 (schematische Darstellung);
Figur 4a eine Draufsicht auf einen Teilbereich des in Figur 4 dargestellten Werkzeugs 400;
Figur 5 das in Figur 4 dargestellte Werkzeug während eines Pressvorgangs (schematische Darstellung);
Figur 6a einen Schnitt durch eine Zelle während eines Pressvorgangs mit einer Ausführungsform des in Fig. 4 und Fig. 5 dargestellten Werkzeugs (schematische Darstellung); und
Figur 6b einen Schnitt durch eine Zelle während eines Pressvorgangs mit einer weiteren Ausführungsform des in Fig. 4 und Fig. 5 dargestellten Werkzeugs (schematische Darstellung).

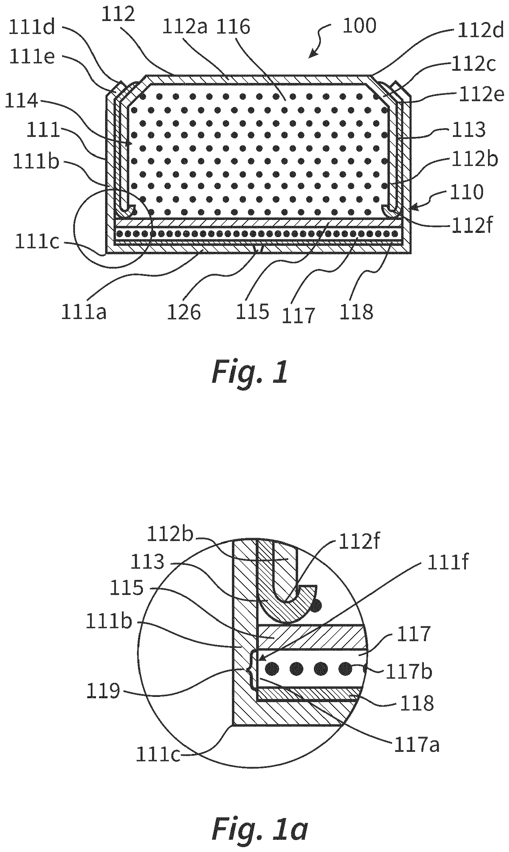

Fig. 1 zeigt einen Querschnitt einer aus dem Stand der Technik bekannten Zink/Luft-Zelle 100 in Knopfzellenform. Eine teilweise Vergrößerung dieses Querschnitts ist in Fig. 1a dargestellt.

Die Zink/Luft-Zelle 100 umfasst ein metallisches Gehäuse 110, welches sich aus einem Zellenbecher 111, einem Zellendeckel 112 und einer Dichtung 113 zusammensetzt.

Der Zellenbecher 111 weist einen kreisförmig ausgebildeten Bodenbereich 111a, einen ringförmigen Mantelbereich 111b und eine den Bodenbereich 111a und den Mantelbereich 111b trennende umlaufende Kante 111c auf. Der Mantelbereich 111b stößt in einem Winkel von 90° auf den Bodenbereich 111a. Endständig wird der Mantelbereich 111b durch die Schnittkante 111d begrenzt, die den Öffnungsrand des Zellenbechers 111 bildet.

Der Zellendeckel 112 weist einen kreisförmig ausgebildeten Bodenbereich 112a, einen ringförmigen Mantelbereich 112b und einen den Bodenbereich 112a und den Mantelbereich 112b verbindenden umlaufenden Übergangsbereich 112c auf. Der Übergangsbereich 112c wird durch die umlaufenden Kanten 112d und 112e vom Bodenbereich 112a und den Mantelbereich 112b getrennt. Der Mantelbereich 112b und der Bodenbereich 112a schließen einen Winkel von 90° ein. Endständig wird der Mantelbereich 112b durch die Schnittkante 112f begrenzt, die den Öffnungsrand des Zellendeckels 112 bildet.

Der Zellendeckel 112 ist mit der Schnittkante 112f voran in den Zellenbecher 111 eingeschoben. Die Dichtung 113 trennt den Zellenbecher 111 und den Zellendeckel 112 voneinander. Sie soll gewährleisten, dass die beiden Gehäuseteile Zellenbecher 111 und Zellendeckel 112 elektrisch gegeneinander isoliert sind. Darüber soll sie das Gehäuse 110 abdichten und ein Auslaufen von Elektrolyt verhindern.

Geschlossen ist das Gehäuse 110 durch Umbördeln. Zum Umbördeln ist ein endständiges Segment 111e des Mantelbereichs 111b des Zellenbechers einschließlich der Schnittkante 111d radial nach innen eingedrückt. Das endständige Segment 111e liegt auf dem Übergangsbereich 112c des Zellendeckels 112 bzw. auf der in diesem Bereich aufgebrachten Dichtung 113 auf. Durch das Umbördeln sind der Zellenbecher 111 und der Zellendeckel 112 formschlüssig miteinander verbunden. Sie schließen gemeinsam den Innenraum 114 ein.

Der Innenraum 114 wird durch den scheibenförmigen Separator 115 in zwei Teilbereiche unterteilt. In einem der Teilbereiche ist eine Zinkpaste als Anode 116 angeordnet. Die Anode 116 steht mit dem Zellendeckel 112 in unmittelbarem Kontakt. Der Zellendeckel 112 bildet entsprechend den negativen Pol der dargestellten Zink/Luft-Knopfzelle 100. In dem anderen der Teilbereiche sind die Luftkathode 117 und die Luftverteilerschicht 118 angeordnet. Der Separator 115 ist mit einem alkalischen Elektrolyten getränkt, so dass Hydroxidionen von der Luftkathode 117 zur Anode 116 wandern können. Der Zellenbecher 111 weist die Eintrittsöffnung 126 im Bodenbereich 111a auf, über die Luftsauerstoff in den Innenraum 114 eindringen kann.

Die Luftkathode 117 ist scheibenförmig als Kathodenscheibe ausgebildet und weist einen umlaufenden Kathodenscheibenrand 117a auf. Sie umfasst eine metallische Ableiterstruktur 117b, die an dem Kathodenscheibenrand 117a aus der Kathodenscheibe austritt. Die metallische Ableiterstruktur 117b ist elektrisch mit dem Zellenbecher 111 verbunden, der entsprechend den positiven Pol der dargestellten Zink/Luft-Knopfzelle 100 bildet. Hierzu liegt der Kathodenscheibenrand 117a entlang einer umlaufenden Kontaktzone 119 an der Innenseite 111f des Mantelbereichs 111b des Zellenbechers 111 an.

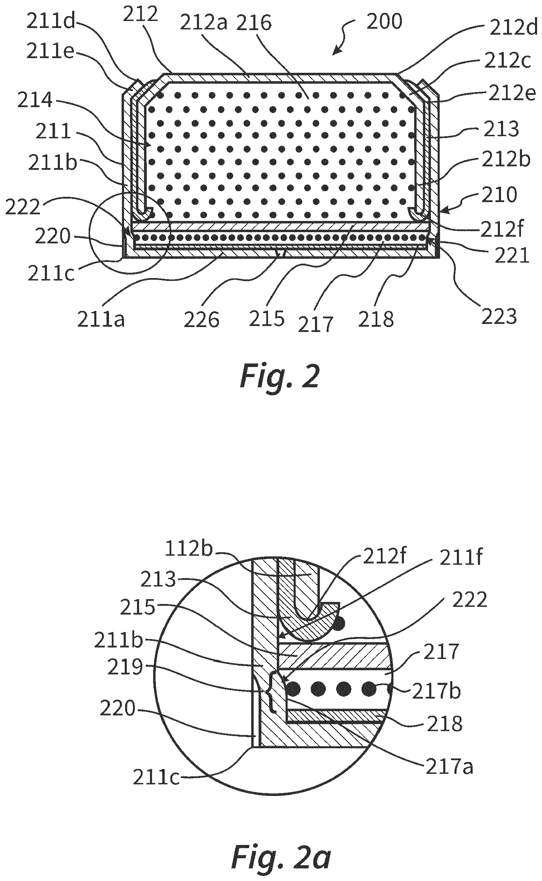

Fig. 2 zeigt einen Querschnitt einer Ausführungsform einer erfindungsgemäßen Zink/Luft-Knopfzelle 200. Eine teilweise Vergrößerung dieses Querschnitts ist in Fig. 2a dargestellt.

Die Zink/Luft-Knopfzelle 200 umfasst ein metallisches Gehäuse 210, welches sich aus einem Zellenbecher 211, einem Zellendeckel 212 und einer Dichtung 213 zusammensetzt.

Der Zellenbecher 211 weist einen kreisförmig ausgebildeten Bodenbereich 211a, einen ringförmigen Mantelbereich 211b und eine den Bodenbereich 211a und den Mantelbereich 211b trennende umlaufende Kante 211c auf. Der Mantelbereich 211b stößt in einem Winkel von 90° auf den Bodenbereich 211a. Endständig wird der Mantelbereich 211b durch die Schnittkante 211d begrenzt, die den Öffnungsrand des Zellenbechers 211 bildet.

Der Zellendeckel 212 weist einen kreisförmig ausgebildeten Bodenbereich 212a, einen ringförmigen Mantelbereich 212b und einen den Bodenbereich 212a und den Mantelbereich 212b verbindenden umlaufenden Übergangsbereich 212c auf. Der Übergangsbereich 212c wird durch die umlaufenden Kanten 212d und 212e vom Bodenbereich 212a und den Mantelbereich 212b getrennt. Der Mantelbereich 212b und der Bodenbereich 212a schließen einen Winkel von 90° ein. Endständig wird der Mantelbereich 212b durch die Schnittkante 212f begrenzt, die den Öffnungsrand des Zellendeckels 212 bildet.

Der Zellendeckel 212 ist mit der Schnittkante 212f voran in den Zellenbecher 211 eingeschoben. Die Dichtung 213 trennt den Zellenbecher 211 und den Zellendeckel 212 voneinander. Sie soll gewährleisten, dass die beiden Gehäuseteile Zellenbecher 211 und Zellendeckel 212 elektrisch gegeneinander isoliert sind. Darüber soll sie das Gehäuse 210 abdichten und ein Auslaufen von Elektrolyt verhindern.

Geschlossen ist das Gehäuse 210 durch Umbördeln. Zum Umbördeln ist ein endständiges Segment 211e des Mantelbereichs 211b des Zellenbechers einschließlich der Schnittkante 211d radial nach innen eingedrückt. Das endständige Segment 211e liegt auf dem Übergangsbereich 212c des Zellendeckels 212 bzw. auf der in diesem Bereich aufgebrachten Dichtung 213 auf. Durch das Umbördeln sind der Zellenbecher 211 und der Zellendeckel 212 formschlüssig miteinander verbunden. Sie schließen gemeinsam den Innenraum 214 ein.

Der Innenraum 214 wird durch den scheibenförmigen Separator 215 in zwei Teilbereiche unterteilt. In einem der Teilbereiche ist eine Zinkpaste als Anode 216 angeordnet. Die Anode 216 steht mit dem Zellendeckel 212 in unmittelbarem Kontakt. Der Zellendeckel 212 bildet entsprechend den negativen Pol der dargestellten Knopfzelle 200. In dem anderen der Teilbereiche sind die Luftkathode 217 und die Luftverteilerschicht 218 angeordnet. Der Separator 215 ist mit einem alkalischen Elektrolyten getränkt, so dass Hydroxidionen von der Luftkathode 217 zur Anode 216 wandern können. Der Zellenbecher 211 weist die Eintrittsöffnung 226 im Bodenbereich 211a auf, über die Luftsauerstoff in den Innenraum 214 eindringen kann.

Die Luftkathode 217 ist scheibenförmig als Kathodenscheibe ausgebildet und weist einen umlaufenden Kathodenscheibenrand 217a auf. Sie umfasst eine metallische Ableiterstruktur 217b, die an dem Kathodenscheibenrand 217a aus der Kathodenscheibe austritt. Die metallische Ableiterstruktur 217b ist elektrisch mit dem Zellenbecher 211 verbunden, der entsprechend den positiven Pol der dargestellten Metall/Luft-Zelle 200 bildet. Hierzu liegt der Kathodenscheibenrand 217a entlang einer umlaufenden Kontaktzone 219 an der Innenseite 211f des Mantelbereichs 211b des Zellenbechers 211 an.

Der Zellenbecher 211 weist auf der Außenseite des Mantelbereichs 211b mehrere durch Eindrücken eingebrachte Vertiefungen auf. Insgesamt sechs Vertiefungen sind gleichmäßig über die Außenseite des Mantelbereichs verteilt, die Abstände zwischen benachbarten Vertiefungen sind jeweils gleich groß. Der dargestellte Schnitt erfasst die Vertiefungen 220 und 221. Die Vertiefungen sind jeweils als längliche Kerben ausgebildet und erstrecken sich ausgehend von der umlaufenden Kante 211c des Zellenbechers 211 axial nach oben in den Mantelbereich 211b.

Auf der Innenseite 211f des Zellenbechers 211 treten die Vertiefungen jeweils als Erhöhungen in Erscheinung. Gut zu erkennen sind die zu den Vertiefungen 220 und 221 korrespondierenden Erhöhungen 222 und 223. Im Bereich der Erhöhungen tritt eine lokale Verringerung des Innenradius des Zellenbechers auf. Die Erhöhungen üben daher im Bereich der Kontaktzone 219 einen Druck gegen den Kathodenscheibenrand 217a aus.

In Folge dieses Drucks kann die elektrische Verbindung der Ableiterstruktur 217b mit dem Zellenbecher 211 in der umlaufenden Kontaktzone 219 eine deutliche Verbesserung erfahren.

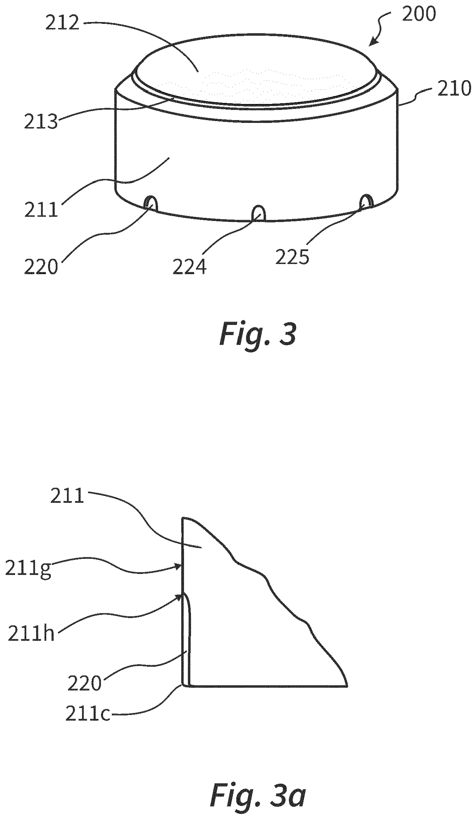

Fig. 3 zeigt eine Draufsicht auf die in Fig. 2 dargestellte Zelle schräg von oben.

Dargestellt sind der Zellenbecher 211, der Zellendeckel 212 und die Dichtung 213. Von den in Fig. 2 dargestellten Vertiefungen ist hier lediglich die Vertiefung 220 zu erkennen. Die Vertiefung 221 befindet sich nicht sichtbar auf der Rückseite der Zelle. Hingegen sind hier zusätzlich die vom in Fig. 2 abgebildeten Schnitt nicht erfassten Vertiefungen 224 und 225 dargestellt.

Fig. 3a zeigt einen durch die Vertiefung 220 geführten auszugsweisen Querschnitt der in Fig. 3 dargestellten Zelle 200. Dargestellt ist die Außenseite 211g des Zellbechers 211 samt der darin eingebrachten Vertiefung 220. Die Vertiefung 220 ist beidseitig in Umfangsrichtung begrenzt. Ihre axiale Ausdehnung erstreckt sich von der Kante 211c bis zum Punkt 211h. Durch den Punkt 211h wird sie einseitig nach oben in axialer Richtung begrenzt.

In der Regel ist die Vertiefung ≤ 0,7 mm lang. Wenn die Zelle 200 beispielsweise die Dimensionen einer Hörgerätebatterie vom Typ PR44 aufweist, dann kann die Vertiefung 220 eine Höhe von bis zu 0,7 mm, gemessen von der Kante 211c, eine maximale Tiefe von 0,05 bis 0,2 mm und eine maximale Breite von bis zu 0,4 mm aufweisen.

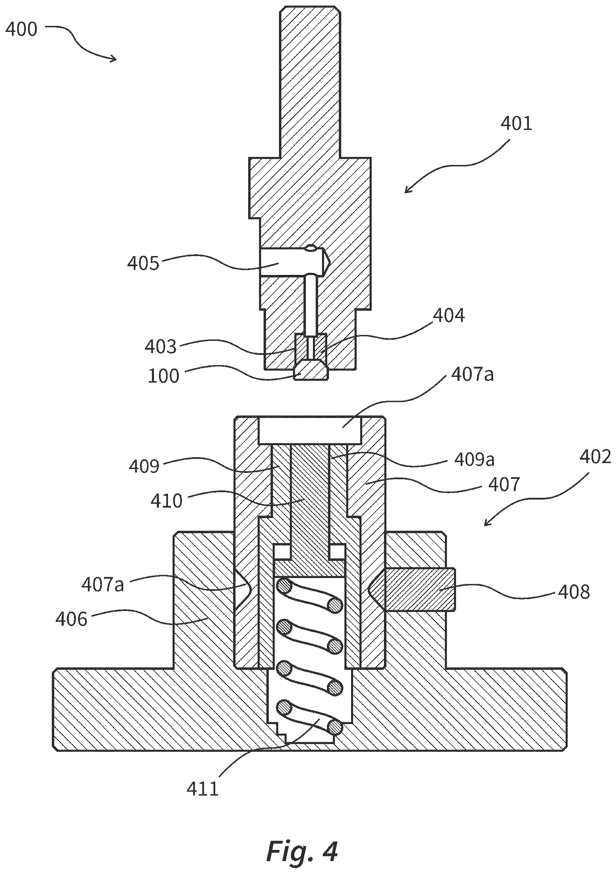

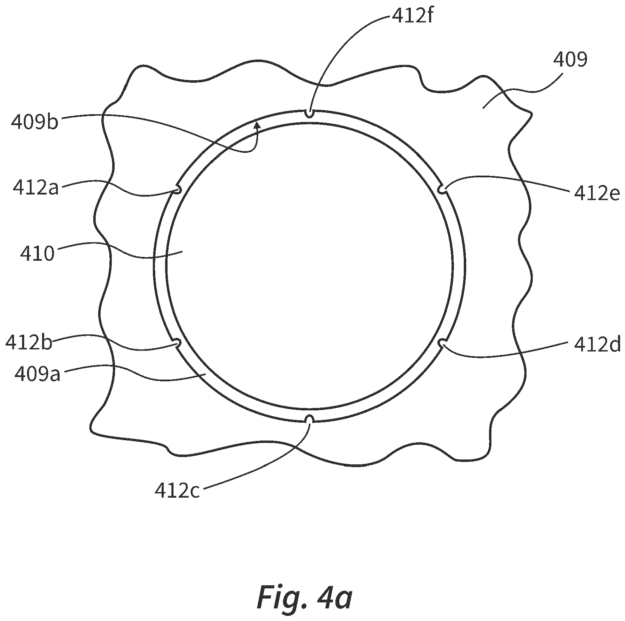

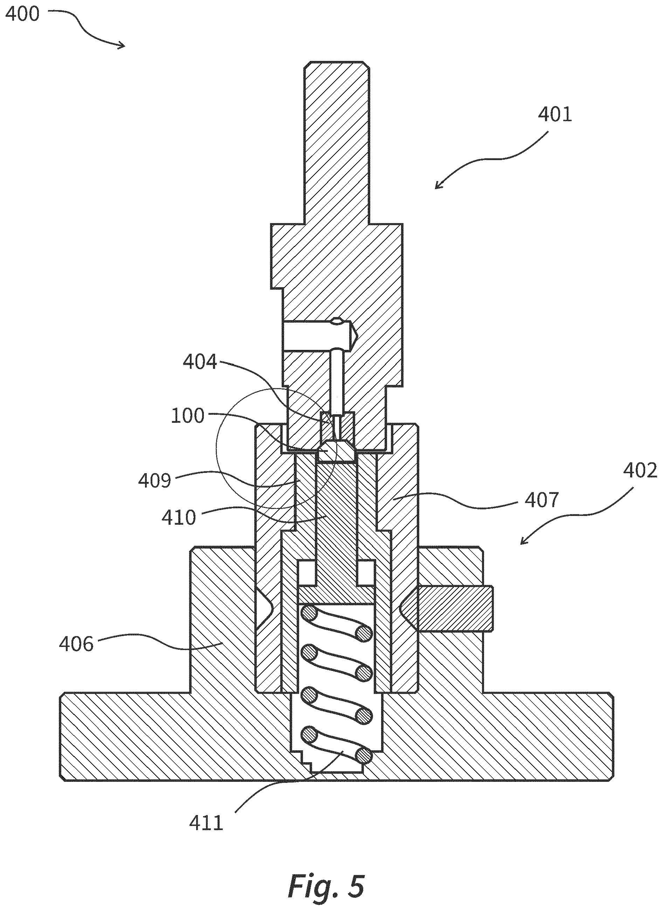

Die Figuren 4 und 5 zeigen einen Schnitt eines zur Herstellung erfindungsgemäßer Metall/Luft-Knopfzellen geeigneten Werkzeugs 400. Es dient zum Einbringen von Vertiefungen in den Mantelbereich von Metall/Luft-Zellen, insbesondere von Zink/Luft-Zellen, wie sie in Fig. 1 dargestellt sind. Fig. 4 zeigt das Werkzeug in geöffnetem Zustand, Fig. 5 geschlossen während eines Pressvorgangs.

Das Werkzeug 400 umfasst ein Oberteil 401 und ein Unterteil 402. Das Oberteil 401 weist eine Aufnahme 403 auf, in die der Wechseleinsatz 404 eingesetzt ist. Der Wechseleinsatz 404 weist auf seiner Unterseite eine Aufnahme für die zu bearbeitende Zelle, hier die aus Fig. 1 bekannte Zink/Luft-Zelle 100, auf. Durch Wechseln des Einsatzes 404 kann das Oberteil 401 an unterschiedliche Knopfzellendimensionen und Geometrien angepasst werden. Über den Kanal 405 ist die auf der Unterseite des Wechseleinsatzes 404 befindliche Aufnahme 404c mit einer Unterdruckquelle (nicht dargestellt) verbunden und kann mit Unterdruck beaufschlagt werden. So kann die dargestellte Zelle 100 in der Aufnahme gehalten werden.

Das Unterteil 402 weist eine Basis 406 auf, in der die Buchse 407 über eine umlaufende Nut 407a mittels eines Arretierungsmittels 408 fixiert ist. Der Buchse 407 weist einen zentralen, zylindrischen Kanal auf, in dem die wechselbare Umformungshülse 409 angeordnet ist. Diese weist eine zentrale Bohrung 409a auf, in der axial verschiebbar der Auswerfer 410 gelagert ist. Unterhalb des Auswerfers 410 befindet sich eine Feder411, mit der der Auswerfer 410 betätigt werden kann.

Während eines Vorgangs zum Einbringen von Vertiefungen in den Mantelbereich der in der Aufnahme des Wechseleinsatzes 404 gehaltenen Zelle 100 senkt man das Oberteil 401 ab, bis es auf dem Boden der Aufnahme 407a aufsitzt, wie in Fig. 5 dargestellt. Die Zelle 100 wird dabei in die Bohrung 409a gepresst. Die Wand der Bohrung 409a weist mehrere hier nicht dargestellte Erhöhungen auf, die beim Einpressen der Zelle 100 in die Außenseite des Mantelbereichs eingedrückt werden und dabei die gewünschten Vertiefungen erzeugen. Nach abgeschlossenem Vorgang kann die Zelle mittels des Auswerfers 410 ausgeworfen werden.

Fig. 4a zeigt die Aufnahme 407a senkrecht von oben. Dargestellt ist die Umformungshülse 409 mit der Bohrung 409a, in der der Auswerfer 410 angeordnet ist. Die Bohrung 409a bildet eine kreisförmige Aufnahme für die einzupressende Zelle 100. Die Wandung 409b der Bohrung 409a weist sechs Erhebungen 412a-f auf, die in die Bohrung 409a hineinragen.

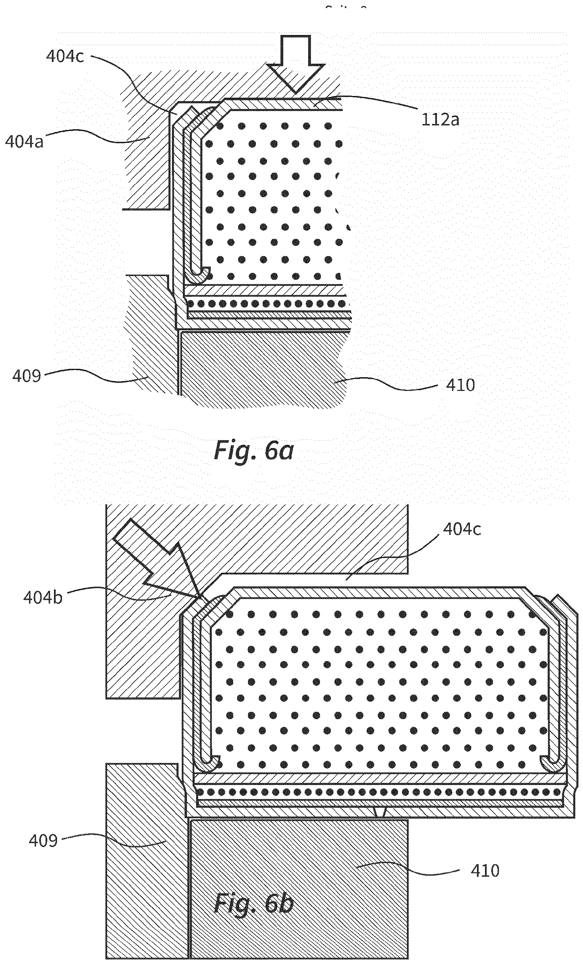

Figs. 6a und 6b zeigen jeweils einen Schnitt durch eine Zelle 100 während eines Pressvorgangs mit einer Ausführungsform des in Fig. 4 und Fig. 5 dargestellten Werkzeugs mit abgesenktem Oberteil 401.

Bei der in Fig. 6a dargestellten Ausführungsform wird eine Variante 404a des Einsatzes 404 verwendet, die derart ausgebildet ist, dass der Boden der Aufnahme 404c flach auf dem Bodenbereich 112a des Deckels 112 der in der Aufnahme 404c befindlichen Zelle 100 aufliegt. Beim Absenken des Oberteils 401 wird entsprechend der Bodenbereich 112a mit Kraft beaufschlagt.

Bei der in Fig. 6b dargestellten Ausführungsform wird eine Variante 404b des Einsatzes 404 verwendet, die derart ausgebildet ist, dass der Boden der Aufnahme 404c auf dem Segment 111e des Zellenbechers 111 der in der Aufnahme 404c befindlichen Zelle 100 aufliegt. Beim Absenken des Oberteils 401 wird entsprechend das Segment 111e und der darunterliegende Übergangsbereich 112c sowie die dazwischen liegende Dichtung 113 mit Kraft beaufschlagt.

### Ausführungsbeispiel

Bei Impedanztests an Knopfzellen vom Typ der in Fig. 1 dargestellten Zelle 100 wurden 336 Zellen aufgrund zu hoher Impedanzwerte aussortiert. In die Außenseite des Mantelbereichs des Zellenbechers dieser 336 Zellen wurden mittels des in den Figuren 4 und 5 dargestellten Werkzeugs sechs in Umfangsrichtung gleichmäßig voneinander beabstandete Vertiefungen eingebracht. Anschließend wurden die Zellen einem erneuten Impedanztest unterzogen. Bei 311 Zellen konnte die Impedanz auf Normalniveau abgesenkt werden.

## Patentansprüche

1. Metall/Luft-Zelle (200) in Knopfzellenform mit den Merkmalen
a. Sie umfasst ein Gehäuse (210) mit einem Innenraum (214), und
b. sie umfasst in dem Innenraum (214) eine metallhaltige Anode (216), eine Luftkathode (217), und einen zwischen der Anode (216) und der Luftkathode (217) angeordneten Separator (215),
wobei
c. das Gehäuse (210) einen Zellenbecher (211) und einen Zellendeckel (212) sowie eine Dichtung (213) umfasst,
d. der Zellenbecher (211) einen Bodenbereich (211a), einen ringförmigen Mantelbereich (211b) und eine den Bodenbereich (211a) und den Mantelbereich (211b) trennende umlaufende Kante (211c) aufweist,
e. der Zellenbecher (211) mindestens eine Eintrittsöffnung (226) im Bodenbereich (211a) aufweist, über die Luftsauerstoff in den Innenraum (214) eindringen kann, und
f. der Zellenbecher (211) und jeder seiner Bereiche eine in den Innenraum (214) weisende Innenseite (211f) sowie eine entgegengesetzt gerichtete Außenseite (211g) aufweist,
wobei
g. die Luftkathode (217) als Kathodenscheibe mit einem umlaufenden Kathodenscheibenrand (217a) ausgebildet ist,
h. die Luftkathode (217) eine metallische Ableiterstruktur (217b) umfasst, die an dem Kathodenscheibenrand (217a) aus der Kathodenscheibe (217) austritt, und
i. die Kathodenscheibe derart in dem Gehäuse (210) angeordnet ist, dass der Kathodenscheibenrand (217a) entlang einer umlaufenden Kontaktzone (219) an der Innenseite (211f) des Mantelbereichs (211b) des Zellenbechers (211) anliegt,
wobei
j. der Zellenbecher (211) auf seiner Außenseite (211g) mindestens eine durch Eindrücken eingebrachte Vertiefung (220) aufweist, die auf der Innenseite (211f) des Zellenbechers (211) als Erhöhung (222) in Erscheinung tritt, und
k. die mindestens eine Vertiefung (220) derart in die Außenseite (211g) des Mantelbereichs (211b) eingebracht ist, dass die Erhöhung (222) im Bereich der Kontaktzone (219) einen Druck gegen den Kathodenscheibenrand (217a) ausübt, sowie **gekennzeichnet durch** die folgenden zusätzlichen Merkmale
l. die mindestens eine Vertiefung (220) ist länglich ausgebildet, und erstreckt sich auf der Außenseite (211g) des Mantelbereichs (211b) des Zellenbechers (211) in axialer Richtung.

2. Metall/Luft-Zelle nach Anspruch 1 mit mindestens einem der folgenden zusätzlichen Merkmale:
a. Der Bodenbereich (211a) des Zellenbechers (211) ist eben ausgebildet.
b. Die Kathodenscheibe (217) ist parallel zu dem Bodenbereich (211a) des Zellenbechers (211) ausgerichtet.
c. Zwischen dem Bodenbereich (211a) des Zellenbechers (211) und der Kathodenscheibe (217) befindet sich eine Luftverteilerschicht (218).
d. Der Separator (215) ist als Separatorscheibe mit einem umlaufenden Separatorscheibenrand ausgebildet.
e. Die Separatorscheibe (215) ist parallel zum Bodenbereich (211a) ausgerichtet.
f. Die Separatorscheibe (215) liegt unmittelbar auf der Kathodenscheibe (217) auf.

3. Metall/Luft-Zelle nach Anspruch 1 oder nach Anspruch 2 mit mindestens einem der folgenden zusätzlichen Merkmale:
a. Die mindestens eine Vertiefung (220) ist als Kerbe ausgebildet.
b. Die mindestens eine längliche Vertiefung (220) erstreckt sich ausgehend von der umlaufenden Kante (211c) des Zellenbechers (211) axial in den Mantelbereich (211b).

4. Metall/Luft-Zelle nach einem der vorhergehenden Ansprüche mit mindestens einem der folgenden zusätzlichen Merkmale:
a. Der Mantelbereich (211b) des Zellenbechers (211) umfasst ein endständiges Segment (211e), das zum Schließen des Gehäuses (210) radial nach innen eingedrückt ist.
b. Die mindestens eine längliche Vertiefung (220) erstreckt sich ausgehend von der umlaufenden Kante (211c) des Zellenbechers (211) axial über den Mantelbereich (211b) bis hin zu dem endständigen Segment (211e).

5. Metall/Luft-Zelle nach einem der vorhergehenden Ansprüche mit dem folgenden zusätzlichen Merkmal:
a. Der Zellenbecher (211) weist auf seiner Außenseite (211g) 2 bis 12, bevorzugt 2 bis 8, der durch Eindrücken eingebrachten Vertiefungen (220; 221; 224; 225) auf.

6. Verfahren zur Herstellung einer Metall/Luft-Zelle in Knopfzellenform, welche
- ein Gehäuse (210) mit einem Innenraum (214) umfasst, und
- eine metallhaltige Anode (216), eine Luftkathode (217), und einen zwischen der Anode (216) und der Luftkathode (217) angeordneten Separator (215), umfasst, die in dem Innenraum (214) angeordnet sind,
wobei
- das Gehäuse (210) einen Zellenbecher (211) und einen Zellendeckel (212) sowie eine Dichtung (213) umfasst,
- der Zellenbecher (211) einen Bodenbereich (211a), einen ringförmigen Mantelbereich (211b) und eine den Bodenbereich (211a) und den Mantelbereich (211b) trennende umlaufende Kante (211c) aufweist,
- der Zellenbecher (211) mindestens eine Eintrittsöffnung (226) im Bodenbereich (211a) aufweist, über die Luftsauerstoff in den Innenraum (214) eindringen kann, und
- der Zellenbecher (211) und jeder seiner Bereiche eine in den Innenraum (214) weisende Innenseite (211f) sowie eine entgegengesetzt gerichtete Außenseite (211g) aufweist,
wobei
- die Luftkathode (217) als Kathodenscheibe mit einem umlaufenden Kathodenscheibenrand (217a) ausgebildet ist,
- die Luftkathode (217) eine metallische Ableiterstruktur umfasst, die an dem Kathodenscheibenrand (217a) aus der Kathodenscheibe austritt, und
- die Kathodenscheibe derart in dem Gehäuse (210) angeordnet ist, dass der Kathodenscheibenrand (217a) entlang einer umlaufenden Kontaktzone (219) an der Innenseite (211f) des Mantelbereichs (211b) des Zellenbechers (211) anliegt,
wobei sich das Verfahren durch den folgenden Schritt auszeichnet:
a. In die Außenseite (211g) des Zellenbechers (211) wird durch Eindrücken mindestens eine länglich ausgebildete Vertiefung (220) derart eingebracht, dass
- sie auf der Innenseite (211f) des Zellenbechers (211) als Erhöhung (222) in Erscheinung tritt und die Erhöhung (222) im Bereich der Kontaktzone (219) gegen den Kathodenscheibenrand (217a) drückt, und
- sie sich auf der Außenseite (211g) des Mantelbereichs (211b) des Zellenbechers (211) in axialer Richtung erstreckt.

## Claims

1. Metal/air cell (200) in button cell form having the following features
a. it comprises a housing (210) having an interior (214), and
b. in the interior (214), it comprises a metal-containing anode (216), an air cathode (217), and a separator (215) arranged between the anode (216) and the air cathode (217),
wherein
c. the housing (210) comprises a cell cup (211) and a cell top (212) as well as a seal (213),
d. the cell cup (211) has a base region (211a), an annular shell region (211b) and a circumferential edge (211c) that separates the base region (211a) and the shell region (211b),
e. the cell cup (211) has at least one inlet opening (226) in the base region (211a) via which atmospheric oxygen can enter the interior (214), and
f. the cell cup (211) and each of its regions has an inner side (211f) facing the interior (214) and an oppositely directed outer side (211g),
wherein
g. the air cathode (217) is designed as a cathode disc having a circumferential cathode disc periphery (217a),
h. the air cathode (217) comprises a metal collector structure (217b), which emerges from the cathode disc (217) at the cathode disc periphery (217a), and
i. the cathode disc is arranged in the housing (210) in such a way that the cathode disc periphery (217a) bears along a circumferential contact zone (219) against the inner side (211f) of the shell region (211b) of the cell cup (211),
wherein
j. the outer side (211g) of the cell cup (211) has at least one depression (220) introduced by way of impression, said depression becoming visible as an elevation (222) on the inner side (211f) of the cell cup (211), and
k. the at least one depression (220) is introduced into the outer side (211g) of the shell region (211b) in such a way that the elevation (222) exerts a pressure against the cathode disc periphery (217a) in the region of the contact zone (219),
and **characterized by** the following additional features
l. the at least one depression (220) is of elongate form, and extends in the axial direction on the outer side (211g) of the shell region (211b) of the cell cup (211).

2. Metal/air cell according to Claim 1 having at least one of the following additional features:
a. the base region (211a) of the cell cup (211) is of planar form.
b. the cathode disc (217) is aligned parallel to the base region (211a) of the cell cup (211).
c. an air distributor layer (218) is located between the base region (211a) of the cell cup (211) and the cathode disc (217).
d. the separator (215) is designed as a separator disc having a circumferential separator disc periphery.
e. the separator disc (215) is aligned parallel to the base region (211a).
f. the separator disc (215) rests directly on the cathode disc (217).

3. Metal/air cell according to Claim 1 or according to Claim 2 having at least one of the following additional features:
a. the at least one depression (220) is designed as a groove.
b. the at least one elongate depression (220) extends axially into the shell region (211b) starting from the circumferential edge (211c) of the cell cup (211).

4. Metal/air cell according to one of the preceding claims having at least one of the following additional features:
a. the shell region (211b) of the cell cup (211) comprises a terminal segment (211e), which is impressed radially inwards in order to close the housing (210).
b. the at least one elongate depression (220) extends axially over the shell region (211b) up to the terminal segment (211e) starting from the circumferential edge (211c) of the cell cup (211).

5. Metal/air cell according to one of the preceding claims having the following additional feature:
a. the outer side (211g) of the cell cup (211) has 2 to 12, preferably 2 to 8, of the depressions (220; 221; 224; 225) introduced by way of impression.

6. Method for producing a metal/air cell in button cell form, which comprises
- a housing (210) having an interior (214), and
- a metal-containing anode (216), an air cathode (217), and a separator (215) arranged between the anode (216) and the air cathode (217), which are arranged in the interior (214),
wherein
- the housing (210) comprises a cell cup (211) and a cell top (212) as well as a seal (213),
- the cell cup (211) has a base region (211a), an annular shell region (211b) and a circumferential edge (211c) that separates the base region (211a) and the shell region (211b),
- the cell cup (211) has at least one inlet opening (226) in the base region (211a) via which atmospheric oxygen can enter the interior (214), and
- the cell cup (211) and each of its regions has an inner side (211f) facing the interior (214) and an oppositely directed outer side (211g),
wherein
- the air cathode (217) is designed as a cathode disc having a circumferential cathode disc periphery (217a),
- the air cathode (217) comprises a metal collector structure, which emerges from the cathode disc at the cathode disc periphery (217a), and
- the cathode disc is arranged in the housing (210) in such a way that the cathode disc periphery (217a) bears along a circumferential contact zone (219) against the inner side (211f) of the shell region (211b) of the cell cup (211),
wherein the method is **characterized by** the following step:
a. at least one depression (220) of elongate form is introduced into the outer side (211g) of the cell cup (211) by way of impression in such a way that
- said depression becomes visible as an elevation (222) on the inner side (211f) of the cell cup (211) and the elevation (222) presses against the cathode disc periphery (217a) in the region of the contact zone (219), and
- said depression extends in the axial direction on the outer side (211g) of the shell region (211b) of the cell cup (211).

## Revendications

1. Cellule air/métal (200) de type bouton, présentant les caractéristiques suivantes:
a. elle comprend un boîtier (210) avec un espace intérieur (214), et
b. elle comprend dans l'espace intérieur (214) une anode contenant du métal (216), une cathode à air (217) et un séparateur (215) disposé entre l'anode (216) et la cathode (217),
dans laquelle
c. le boîtier (210) comprend un godet de cellule (211) et un couvercle de cellule (212) ainsi qu'un joint d'étanchéité (213),
d. le godet de cellule (211) présente une région de fond (211a), une région d'enveloppe latérale annulaire (211b) et un bord périphérique (211c) séparant la région de fond (211a) et la région d'enveloppe latérale (211b),
e. le godet de cellule (211) présente au moins une ouverture d'entrée (226) dans la région de fond (211a), par laquelle de l'oxygène de l'air peut pénétrer dans l'espace intérieur (214), et
f. le godet de cellule (211) et chacune de ses régions présentent un côté intérieur (211f) tourné vers l'espace intérieur (214) ainsi qu'un côté extérieur (211g) orienté en sens contraire,
dans laquelle
g. la cathode à air (217) est formée par un disque de cathode avec un bord périphérique de disque de cathode (217a),
h. la cathode à air (217) comprend une structure de conducteur de sortie métallique (217b), qui sort du disque de cathode (217) au bord de disque de cathode (217a), et
i. le disque de cathode est disposé dans le boîtier (210), de telle manière que le bord de disque de cathode (217a) s'applique sur le côté intérieur (211f) de la région d'enveloppe latérale (211b) du godet de cellule (211) le long d'une zone de contact périphérique (219),
dans laquelle
j. le godet de cellule (211) présente sur son côté extérieur (211g) au moins un creux (220) pratiqué par enfoncement, qui apparaît sous la forme d'une saillie (222) sur le côté intérieur (211f) du godet de cellule (211), et
k. ledit au moins un creux (220) est pratiqué dans le côté extérieur (211g) de la région d'enveloppe latérale (211b) de telle manière que la saillie (222) exerce dans la région de la zone de contact (219) une pression contre le bord de disque de cathode (217a),
et **caractérisée par** la caractéristique supplémentaire suivante:
l. ledit au moins un creux (220) est de forme allongée, et s'étend en direction axiale sur le côté extérieur (211g) de la région d'enveloppe latérale (211b) du godet de cellule (211).

2. Cellule métal/air selon la revendication 1, présentant au moins une des caractéristiques supplémentaires suivantes:
a. la région de fond (211a) du godet de cellule (211) est de forme plane.
b. le disque de cathode (217) est orienté parallèlement à la région de fond (211a) du godet de cellule (211).
c. il se trouve une couche de distribution d'air (218) entre la région de fond (211a) du godet de cellule (211) et le disque de cathode (217).
d. le séparateur (215) est formé par un disque de séparateur avec un bord périphérique de disque de séparateur.
e. le disque de séparateur (215) est orienté parallèlement à la région de fond (211a).
f. le disque de séparateur (215) s'applique directement sur le disque de cathode (217).

3. Cellule métal/air selon la revendication 1 ou la revendication 2, présentant au moins une des caractéristiques supplémentaires suivantes:
a. ledit au moins un creux (220) est formé par une entaille.
b. ledit au moins un creux allongé (220) s'étend axialement dans la région d'enveloppe latérale (211b) à partir du bord périphérique (211c) du godet de cellule (211).

4. Cellule métal/air selon l'une quelconque des revendications précédentes, présentant au moins une des caractéristiques supplémentaires suivantes:
a. la région d'enveloppe latérale (211b) du godet de cellule (211) comprend un segment terminal (221e), qui est enfoncé radialement vers l'intérieur pour la fermeture du boîtier (210).
b. ledit au moins un creux allongé (220) s'étend à partir du bord périphérique (211c) du godet de cellule (211) axialement sur la région d'enveloppe latérale (211b) jusqu'au segment terminal (211e).

5. Cellule métal/air selon l'une quelconque des revendications précédentes, présentant la caractéristique supplémentaire suivante:
a. le godet de cellule (211) présente sur son côté extérieur (211g) 2 à 12, de préférence 2 à 8, des creux (220; 221; 224; 225) pratiqués par enfoncement.

6. Procédé de fabrication d'une cellule métal/air de type bouton, qui
- comprend un boîtier (210) avec un espace intérieur (214), et
- comprend une anode contenant du métal (216), une cathode à air (217), et un séparateur (215) disposé entre l'anode (216) et la cathode à air (217), qui sont disposés dans l'espace intérieur (214),
dans lequel
- le boîtier (210) comprend un godet de cellule (211) et un couvercle de cellule (212) ainsi qu'un joint d'étanchéité (213),
- le godet de cellule (211) présente une région de fond (211a), une région d'enveloppe latérale annulaire (211b) et un bord périphérique (211c) séparant la région de fond (211a) et la région d'enveloppe latérale (211b),
- le godet de cellule (211) présente au moins une ouverture d'entrée (226) dans la région de fond (211a), par laquelle de l'oxygène de l'air peut pénétrer dans l'espace intérieur (214), et
- le godet de cellule (211) et chacune de ses régions présentent un côté intérieur (211f) tourné vers l'espace intérieur (214) ainsi qu'un côté extérieur (211g) orienté en sens contraire,
dans lequel
- la cathode à air (217) est formée par un disque de cathode avec un bord périphérique de disque de cathode (217a),
- la cathode à air (217) comprend une structure de conducteur de sortie métallique, qui sort du disque de cathode (217) au bord de disque de cathode (217a), et
- le disque de cathode est disposé dans le boîtier (210), de telle manière que le bord de disque de cathode (217a) s'applique sur le côté intérieur (211f) de la région d'enveloppe latérale (211b) du godet de cellule (211) le long d'une zone de contact périphérique (219),
dans lequel le procédé est **caractérisé par** l'étape suivante:
a. on pratique par enfoncement dans le côté extérieur (211g) du godet de cellule (211) au moins un creux de forme allongée (220), de telle manière que
- il apparaisse sur le côté intérieur (211f) du godet de cellule (211) sous forme de saillie (222) et que la saillie (222) presse dans la région de contact (219) contre le bord de disque de cathode (217a), et que
- il s'étende en direction axiale sur le côté extérieur (211g) de la région d'enveloppe latérale (211b) du godet de cellule (211) .
